Europäisches Patentamt

European Patent Office

Office européen des brevets

(11) Veröffentlichungsnummer: **0 509 313 A1**

## (12) EUROPÄISCHE PATENTANMELDUNG

(21) Anmeldenummer: **92105558.8**

(22) Anmeldetag: **31.03.92**

(51) Int. Cl.⁵: **F16H 7/12**

(30) Priorität: **18.04.91 DE 4112723**

(43) Veröffentlichungstag der Anmeldung:
**21.10.92 Patentblatt 92/43**

(84) Benannte Vertragsstaaten:
**DE ES FR GB IT SE**

(71) Anmelder: **MAGNA INTERNATIONAL GMBH**
**Altenhasslauer Weg 5-7**
**W-6460 Gelnhausen(DE)**

(72) Erfinder: **Guhr, Wolfgang**
**Emanuel-Geibel-Strasse 31**
**W-6457 Maintal 4(DE)**
Erfinder: **Wilhelm, Peter**
**Herzbachweg 18**
**W-6460 Gelnhausen(DE)**

(74) Vertreter: **Patentanwälte Grünecker,**
**Kinkeldey, Stockmair & Partner**
**Maximilianstrasse 58**
**W-8000 München 22(DE)**

(54) **Riemenspannvorrichtung.**

㊻ Die Erfindung betrifft eine Riemenspannvorrichtung mit einem Basisteil (2b) und einem auf dem Basisteil drehbar gelagerten, federbeaufschlagten Spannteil (1b). Die Aufgabe der Erfindung besteht darin, ein verbessertes Spannteil mit geringer Bauhöhe bei geringem Abnutzungsgrad und dadurch hoher Betriebsdauer bereitzustellen. Diese Aufgabe wird erfindungsgemäß dadurch gelöst, daß zur Lagerung des Spannteiles ein erstes Lager (4b) und in Richtung der Drehachse des ersten Lagers zu dem ersten Lager versetzt und dazu exzentrisch angeordnet ein zweites Lager (5b) vorgesehen ist. Durch diese erfindungsgemäße Lösung wird eine gleichmäßig axiale Flächenpressung und dadurch eine geringe Lagerabnutzung bei geringer axialer Gesamtlänge der Lagerung erreicht.

FIG.3

Die Erfindung betrifft eine Riemenspannvorrichtung mit einem Basisteil und einem auf dem Basisteil drehbar gelagerten, federbeaufschlagten Spannteil.

Derartige Riemenspannvorrichtungen werden in erster Linie zum Spannen von Riemen an Verbrennungsmotoren verwendet. Dazu ist das federbeaufschlagte Spannteil mit einer Spannrolle versehen, die gegen den zu spannenden Riemen zur Anlage kommt. Indem das Spannteil drehbar auf dem Basisteil gelagert ist, kann die Spannrolle dem Riemen unter weiterer Spannung des Riemens nachgeführt werden, wenn sich der Riemen im Laufe der Betriebsdauer aufgeweitet hat. Außerdem kann über die Riemenspannvorrichtung eine Dämpfung von Riemenschwingungen erfolgen, indem für die Lagerung des Spannteiles auf dem Basisteil eine geeignet hohe Lagerreibung vorgesehen wird.

Bei der Wechselwirkung zwischen Riemen und Spannrolle wirkt eine Kraftkomponente auf das Spannteil, die senkrecht auf dessen Drehachse steht und damit ein zu dieser Drehachse senkrechtes Drehmoment erzeugt. Um derartige Drehmomente abzufangen, wurden zur Lagerung der Riemenspanner auf dem Basisteil bisher Gleitlager mit einer verhältnismäßig großen axialen Länge verwendet, was zu einer unvorteilhaft großen Bauhöhe der Riemenspannvorrichtungen führte.

Es ist die Aufgabe der vorliegenden Erfindung, eine Riemenspannvorrichtung der eingangs erwähnten Art, die sich im Vergleich zu bekannten derartigen Riemenspannvorrichtungen mit wesentlich geringerer Bauhöhe herstellen läßt, zu schaffen. Erfindungsgemäß wird diese Aufgabe dadurch gelöst, daß zur Lagerung des Spannteiles ein erstes Lager und in Richtung zur Drehachse des ersten Lagers zu dem ersten Lager versetzt und dazu exzentrisch angeordnet ein zweites Lager vorgesehen ist.

Durch diese erfindungsgemäße Lösung läßt sich eine wesentlich geringere Bauhöhe erzielen, indem durch das zweite exzentrisch angeordnete Lager eine geeignete Vorspannung erzeugt wird, die bei ungleichmäßiger Belastung durch die angreifenden Drehmomente dafür sorgt, daß innerhalb der Lager eine im wesentlichen gleichmäßige Flächenpressung auftritt, wodurch die Lagerabnutzung gering und die Lebensdauer der Spannvorrichtung entsprechend lang ist. Bei der gleichen, erfindungsgemäß erzielbar geringen Bauhöhe wurde ein einziges durchgehendes und entsprechend kurzes Lager durch die Drehmomenteinwirkung derart belastet, daß an den Lagerenden eine überhöhte, für einen schnellen Verschleiß Sorgende Flächenpressung auftritt.

In einer bevorzugten Ausführungsform der Erfindung sind die Lager als Gleitlager ausgebildet und das zweite Lager weist gegenüber dem ersten Lager einen geringeren Durchmesser auf. Damit kann vorteilhaft zwischen dem Basisteil und dem Spannteil zwischen den beiden Lagern ein Ringraum ausgebildet sein, der zur Aufnahme einer schraubenförmigen Spannfeder dienen kann, die mit einem Ende mit dem Basisteil und ihrem anderen Ende mit dem Spannteil verbunden ist.

Im Hinblick auf eine besonders kompakte Bauweise der erfindungsgemäßen Riemenspannvorrichtung kann das Basisteil vorteilhaft mit einer ringförmigen Ausnehmung versehen sein, an deren Boden ein ringförmiger Steg vorsteht, wobei an der äußeren Begrenzungswand der ringförmigen Ausnehmung eine Gleitfläche zur Bildung des ersten Lagers und an dem ringförmig vorstehenden Steg eine Gleitfläche zur Bildung des zweiten Lagers gebildet ist und das Spannteil entsprechend vorstehende Teile zur Bildung von Lagergegenflächen aufweist.

Weitere vorteilhafte Ausgestaltungsmöglichkeiten der Erfindung gehen aus den Unteransprüchen hervor.

Die Erfindung soll nun anhand eines Ausführungsbeispieles und der beiliegenden Zeichnungen näher erläutert und beschrieben werden. Es zeigen:

Fig.1 eine Prinzipskizze zur Darstellung der Belastung eines Lagers für die Lagerung eines Spannteiles auf einem Basisteil einer Riemenspannvorrichtung,

Fig.2 eine Prinzipskizze für die Belastung der Lagerung eines Spannteiles auf einem Basisteil, wenn erfindungsgemäß zwei zueinander axial versetzte und zueinander exzentrisch angeordnete Lager vorgesehen sind, und

Fig.3 ein Ausführungsbeispiel für eine Riemenspannvorrichtung nach der vorliegenden Erfindung mit zwei Ringgleitlagern.

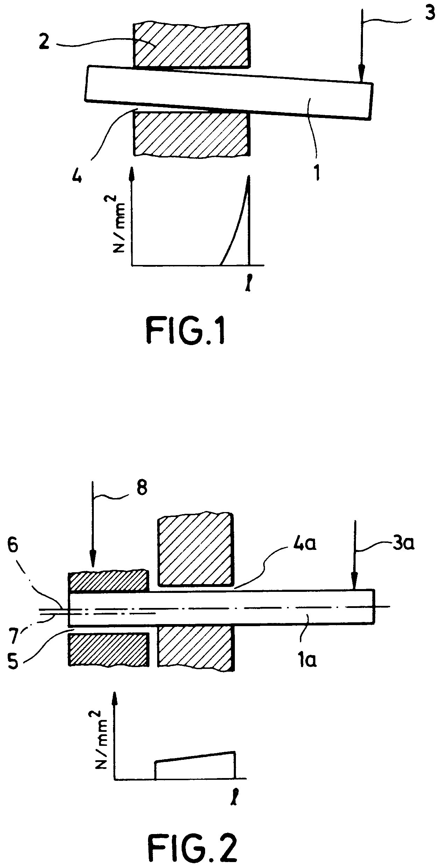

In der Figur 1 ist mit dem Bezugszeichen 1 eine Drehachse eines Spannteiles (dessen weitere Bestandteile in der Figur 1 nicht dargestellt sind) bezeichnet, welches in einem Basisteil 2 gelagert ist. Mit 3 ist ein Pfeil bezeichnet, der eine zu der Drehachse 1 senkrechte Kraftkomponente darstellt, welche durch die Wechselwirkung des Spannteiles mit einem zu spannenden Riemen erzeugt wird. In dem in der Figur 1 zusätzlich dargestellten Diagramm, ist die durch diese Kraftkomponente bewirkte Flächenpressung an der Fußlinie des Gleitlagers 4 in Abhängigkeit von der Länge 1 des Gleitlagers angegeben. Wie zu sehen ist, wird das Gleitlager höchst ungleichmäßig belastet. Während über den größten Teil der Lange 1 die Flächenpressung nahezu gleich Null ist, steigt sie an dem dem Angriffspunkt der Kraftkomponente 3 zugewandten Ende des Lagers sehr steil an. Diese ungleichmäßige Lagerbelastung führt zu einem hohen Verschleiß und damit zu einer geringen Lebensdauer des Lagers. Um diesen Verschleiß möglichst niedrig zu halten, wurde bei bisherigen Lagern eine verhältnismäßig große Lagerlänge 1 vorgesehen, was zu einer unvorteilhaft großen Bauhöhe der bekannten Riemenspannvorrichtungen führte.

In der Prinzipskizze gemäß Figur 2 sind gleiche oder gleichwirkende Teile mit der gleichen, aber mit dem Index a versehenen Bezugszahl wie in der Figur 1 bezeichnet. Gemäß der vorliegenden Erfindung sind zur Lagerung der Drehachse 1a des Spannteiles jedoch zwei Lager, nämlich das Lager 4a und ein weiteres Lager 5 vorgesehen, das in bezug auf den Angriffspunkt der Kraftkomponente 3a hinter dem Lager 4a angeordnet ist. Mit den Bezugszeichen 6 und 7 sind die Drehachsen des Gleitlagers 4a bzw. des Gleitlagers 5 bezeichnet. Wie der Figur 2 zu entnehmen ist, sind diese Drehachsen zueinander versetzt, d. h. die beiden Gleitlager 4a und 5 sind exzentrisch zueinander angeordnet. Mit 8 ist ein Pfeil bezeichnet, durch den eine Kraftkomponente dargestellt wird, deren Größe durch die Exzentrizität des Lagers mitbestimmt wird, wenn die Achse 1a des Spannteiles durch den Riemen, also durch die Kraftkomponente 3a, belastet wird. Insbesondere eine durch die exzentrische Anordnung des Lagers 5 erzeugte Vorspannung bewirkt, daß innerhalb der Lager 4a und 5 die Flächenpressung über die axiale Länge der Lager annähernd gleich verteilt ist. Das in der Figur 2 enthaltene Diagramm zeigt, daß die Flächenpressung längs der Fußlinie des Lagers 4a von einem Lagerende zum anderen nur geringfügig ansteigt. Durch die gleichmäßige Flächenpressung in den Lagern ergibt sich ein geringer Verschleiß und damit eine hohe Betriebsdauer der Spannvorrichtung.

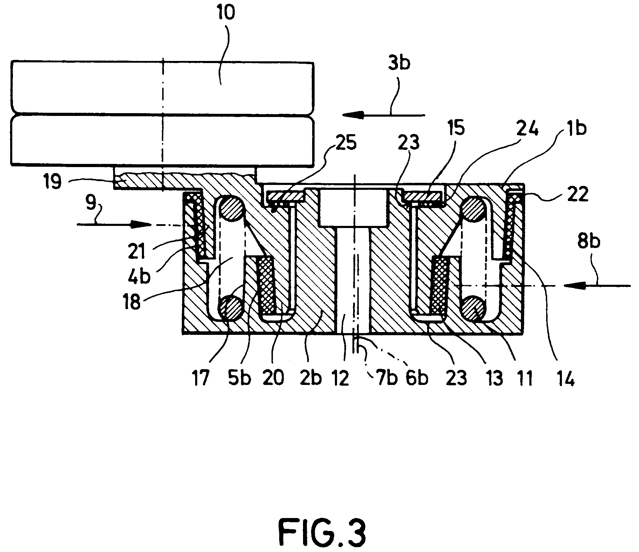

In der Figur 3, in der gleiche oder gleich wirkende Teile mit der gleichen, jedoch mit dem Index b versehenen Bezugszahl bezeichnet sind, ist mit 2b ein im wesentlichen scheibenförmiges Basisteil aus Aluminium bezeichnet, in dem eine Bohrung 12 für z. B. eine Schraubverbindung mit einem Maschinengehäuse, insbesondere dem Gehäuse einer Verbrennungsmaschine, vorgesehen ist. Das Basisteil 2b weist ferner eine ringförmige Ausnehmung 18 auf, von deren Boden ein Ringsteg 17 vorsteht.

In die Ausnehmung 18 greift ein Ringteil eines Spannteiles 1b ein. Das Spannteil 1b umfaßt neben dem Ringteil ferner einen mit dem Ringteil verbundenen Hebelteil 19, an dem eine Spannrolle 10 angebracht ist. Der Ringteil und der Hebelteil des Spannteiles 1b sind im vorliegenden Ausführungsbeispiel einstückig aus Aluminium hergestellt. Der Ringteil des Spannteiles 1b umfaßt einen inneren Ringsteg 20 und einen äußeren Ringsteg 21, wobei beide Ringstege radial voneinander beabstandet sind und in den Ringraum 18 des Basisteiles 2b eingreifen. Der kürzere Ringsteg 21 bildet mit einem Teil der äußeren Begrenzungswand der ringförmigen Ausnehmung 18 ein erstes Gleitlager 4b. An der Stelle des Gleitlagers ist in die ringförmige Ausnehmung 18 ein Polyamidring 14 mit einem auf der dem Spannteil zugewandten Stirnfläche des Basisteiles 2b aufsitzenden Flanschteil 22 eingezogen. Der Polyamidring 14 kann mit dem Basisteil 2b verklebt sein. Zwischen dem Polyamidring 14 und dem Ringsteg 21 ist eine sich in axialer Richtung konisch verjüngende Gleitlagerfläche gebildet.

Auf den zweiten Ringsteg 20, der sich axial etwa über die doppelte Länge wie der Ringsteg 21 in die ringförmige Ausnehmung 18 des Basisteiles 2b hinein erstreckt, ist ein Polyamidring 13 aufgezogen, der gegen eine in dem Ringsteg ausgebildete Schulter 23 seitlich zur Anlage kommt. Der Polyamidring 13 kann mit dem vorstehenden Ringsteg 20 verklebt sein. Zwischen dem Polyamidring 13 und dem vom Boden der Ausnehmung 18 vorstehenden Ringsteg 17 ist eine Lagerfläche eines zweiten Gleitlagers 5b gebildet. Auch die Lagerfläche des zweiten Gleitlagers 5b weist wie die Lagerfläche des ersten Gleitlagers 4b eine axiale konische Verjüngung auf, wobei die Verjüngung in der von dem Spannteil 1b abgewandten Richtung erfolgt.

Mit 6b ist in der Figur 3 die Achse des Gleitlagers 4b bezeichnet, das durch die äußere Begrenzungswand der ringförmigen Ausnehmung 18 bzw. den Polyamidring 14 und den vorstehenden Ringsteg 21 des Spannteiles 1b gebildet ist. Mit 7b ist die Drehachse des Gleitlagers 5b bezeichnet, die zu der Drehachse 6b um, im vorliegenden Ausführungsbeispiel, 0,4 mm versetzt angeordnet ist. Entsprechend exzentrisch zueinander sind also die Lagerflächen des ersten und zweiten Gleitlagers vorgesehen.

In dem Ausführungsbeispiel gemäß der Figur 3 ist durch die ringfömige Ausnehmung 18 und die entsprechende Formung des ringförmigen Teiles des Spannteiles 1b zwischen diesen beiden Teilen ein Ringraum gebildet, in dem eine Spannfeder 11 zum Beaufschlagen des Spannteiles 1b mit einer Spannkraft für den Riemen angeordnet ist. Die schraubenförmige Spannfeder 11 ist an einem Ende mit dem Spannteil und am anderen Ende mit dem Basisteil verbunden, wobei die Verbindungen in der Figur 3 nicht gezeigt sind.

Mit dem Bezugszeichen 15 ist in der Figur 3 ein Klemmring bezeichnet, der zur Verbindung des Basisteiles 2b und des Spannteiles 1b auf eine ringförmige Schulter 23 des Basisteiles 2b aufgezogen ist. Der Klemmring 15 besteht aus Stahl. Der Klemmring 15 kommt über einen zwischenliegenden Gleitring 24 aus Polyamid gegen eine ringförmige Schulter 25 in dem Ringteil des Spannteiles 1b zur Anlage.

Im Betrieb der in der Figur 3 gezeigten Spannvorrichtung tritt eine Kraftkomponente entsprechend dem mit 3b bezeichneten Pfeil auf, welche ein Drehmoment erzeugt, das senkrecht zu der Drehachse 6b bzw. 7b ausgerichtet ist. Die entsprechenden, dieses Drehmoment auffangenden Gegenkräfte entsprechend den mit 9 und 8b bezeichneten Pfeilen werden durch die Gleitlager 4b und 5b aufgebracht. Indem das Gleitlager 5b exzentrisch zu dem Gleitlager 4b angeordnet ist, wird eine geeignete Vorspannung derart erzeugt, daß auf beiden Lagerflächen in axialer Richtung eine weitgehend konstante Flächenpressung erzeugt wird. Durch diese gleichmäßige Flächenpressung ergibt sich eine geringe Abnutzung der Spannvorrichtung und dadurch eine lange Betriebsdauer. Die Größe der Exzentrizität hängt von den Gesamtdimensionen der Spannvorrichtung ab, im vorliegenden Ausführungsbeispiel kommt vorteilhaft ein Bereich von etwa 0,3 bis etwa 0,5 mm in Betracht.

Durch die konische Ausgestaltung der Lagerflächen kann beim Zusammenfügen des Basisteiles 2b und des Spannteiles 1b und durch entsprechende Dimensionierung der Tiefe der Schultern 23 und 25 eine geeignete Flächenpressung an den Lagerflächen erzeugt und damit eine zur optimalen Dämpfung von Riemenschwingungen geeignete Reibungskraft zwischen den aneinandergleitenden Flächen eingestellt werden.

**Patentansprüche**

1. Riemenspannvorrichtung mit einem Basisteil (2) und einem auf dem Basisteil drehbar gelagerten federbeaufschlagten Spannteil (1), **dadurch gekennzeichnet,** daß zur Lagerung des Spannteiles (1) ein erstes Lager (4) und in Richtung der Achse des ersten Lagers zu dem ersten Lager versetzt und dazu exzentrisch angeordnet ein zweites Lager (5) vorgesehen ist.

2. Riemenspannvorrichtung nach Anspruch 1, **dadurch gekennzeichnet,** daß die Exzentrizität zwischen 0,3 und 0,5 mm beträgt.

3. Riemenspannvorrichtung nach Anspruch 2, **dadurch gekennzeichnet,** daß die Exzentrizität 0,4 mm beträgt.

4. Riemenspannvorrichtung nach einem der Ansprüche 1 bis 3, **dadurch gekennzeichnet,** daß die Lager (4, 5) Gleitlager sind.

5. Riemenspannvorrichtung nach einem der Ansprüche 1 bis 4, **dadurch gekennzeichnet,** daß das erste Lager (4) einen größeren Durchmesser als das zweite Lager (5) aufweist.

6. Riemenspannvorrichtung nach einem der Ansprüche 1 bis 5, **dadurch gekennzeichnet,** daß die axiale Lange des zweiten Lagers (5) wenigstens etwa gleich der axialen Länge des ersten Lagers (4) ist.

7. Riemenspannvorrichtung nach einem der Ansprüche 1 bis 6, **dadurch gekennzeichnet,** daß die beiden Lager (4, 5) in axialer Richtung aneinander anschließend angeordnet sind.

8. Riemenspanner nach einem der Ansprüche 1 bis 7, **dadurch gekennzeichnet,** daß die Lager (4, 5) konische Lagerflächen aufweisen.

9. Riemenspannvorrichtung nach einem der Ansprüche 1 bis 8, **dadurch gekennzeichnet,** daß die Lager Polyamidgleitbuchsen (13, 14) aufweisen.

10. Riemenspannvorrichtung nach einem der Ansprüche 1 bis 9, **dadurch gekennzeichnet,** daß das Basisteil (2) und das Spannteil (1) im wesentlichen Aluminium aufweisen.

11. Riemenspannvorrichtung nach wenigstens einem der Ansprüche 1 bis 10, **dadurch gekennzeichnet,** daß das Basisteil (2) eine ringförmige Ausnehmung (18) und einen vom Boden der Ausnehmung vorstehenden ringförmigen Steg (17) aufweist, wobei an der äußeren Begrenzungswand der ringförmigen Ausnehmung (18) eine Gleitlagerfläche für das erste Lager (4b) und an dem ringförmigen Steg (17) eine Gleitlagerfläche für das zweite Lager (5b) vorgesehen ist, und daß das Spannteil (1) entsprechende vorstehende Teile zur Bildung von Gleitlagergegenflächen aufweist.

12. Riemenspannvorrichtung nach einem der Ansprüche 1 bis 11, **dadurch gekennzeichnet,** daß zwischen dem Basisteil (2) und dem Spannteil (1) ein eine Spannfeder (11) aufnehmender Ringraum gebildet ist.

13. Riemenspannvorrichtung nach einem der Ansprüche 1 bis 12, **dadurch gekennzeichnet,** daß das Basisteil (2) und das Spannteil (1) axial durch einen Klemmring (15) zusammengehalten sind.

14. Riemenspannvorrichtung nach Anspruch 13, **dadurch gekennzeichnet,** daß zwischen dem Klemmring (15) und dem Spannteil (1) ein Polyamidgleitring (16) angeordnet ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-C-3 716 571 (W.KOTZAB)<br>* das ganze Dokument *<br>--- | 1,4,5,11 | F16H7/12 |
| P,A | EP-A-0 450 620 (MAGNA)<br><br>* das ganze Dokument *<br>--- | 1,4,8,<br>13,14 | |
| A | EP-A-0 400 772 (LITENS)<br><br>* Zusammenfassung; Abbildung 2 *<br>* Spalte 5, Zeile 35 - Spalte 6, Zeile 4 *<br>--- | 1,4,5,9,<br>14 | |
| A | US-A-4 698 049 (K.K.BYTZEK)<br><br>* Zusammenfassung; Abbildung 3 *<br>--- | 1,8,11,<br>13,14 | |
| A | DE-A-3 728 158 (W.KOTZAB)<br>* Zusammenfassung; Abbildung 1 *<br><br>----- | 1,4,5 | |
| | | | **RECHERCHIERTE SACHGEBIETE (Int. Cl.5 )**<br><br>F16H |

Der vorliegende Recherchenbericht wurde für alle Patentansprüche erstellt

| Recherchenort | Abschlußdatum der Recherche | Prüfer |
|---|---|---|
| BERLIN | 10 JULI 1992 | GERTIG I. |